## Europäisches Patentamt
## European Patent Office
## Office européen des brevets

(11) Veröffentlichungsnummer: **0 065 201**
**B1**

(12) # EUROPÄISCHE PATENTSCHRIFT

(45) Veröffentlichungstag der Patentschrift:
26.08.87

(51) Int. Cl.⁴: **G 01 K 17/08**

(21) Anmeldenummer: **82103848.6**

(22) Anmeldetag: **05.05.82**

(54) **System zur Messung der Wärmeenergieabgabe von Raumheizungen.**

(30) Priorität: **06.05.81 US 260966**

(43) Veröffentlichungstag der Anmeldung:
**24.11.82 Patentblatt 82/47**

(45) Bekanntmachung des Hinweises auf die Patenterteilung:
**26.08.87 Patentblatt 87/35**

(84) Benannte Vertragsstaaten:
**AT BE CH DE FR GB IT LI LU NL SE**

(56) Entgegenhaltungen:
**EP - A - 0 015 407**
**EP - A - 0 035 085**
**WO - A - 82/01589**
**DE - A - 2 521 812**
**DE - A - 2 546 694**
**DE - A - 2 847 217**
**FR - A - 2 410 126**
**FR - A - 2 440 546**

(73) Patentinhaber: **Bleiker, Werner, Ing.-Grad.,
Hafenstrasse 16, D-4354 Datteln (DE)**
Patentinhaber: **Hensel, Dieter, Dipl.-Kaufm.,
Westerweide 39, D-5810 Witten-Herbede (DE)**

(72) Erfinder: **Bleiker, Werner, Ing.-Grad., Hafenstrasse 16,
D-4354 Datteln (DE)**
Erfinder: **Hensel, Dieter, Dipl.-Kaufm., Westerweide 39,
D-5810 Witten-Herbede (DE)**

(74) Vertreter: **Zenz, Joachim Klaus, Dipl.-Ing. et al, ZENZ &
HELBER Patentanwälte Am Ruhrstein 1,
D-4300 Essen 1 (DE)**

ACTORUM AG

## Beschreibung

Die Erfindung bezieht sich auf ein System zur Messung der Wärmeenergieabgabe von Raum heizungen nach dem Oberbegriff des Anspruchs 1.

Zur quantitativen Messung und Anzeige der Wärmeenergieabgabe von einem Heizkörper an einen umbauten Raum bediente man sich bisher sogenannter Wärmemengenzähler (US-A-3 301 049). Bei diesen Wärmemengenzählern wird das Produkt aus Wassermenge und Temperaturdifferenz zwischen Heizkörpervorlauf und -rücklauf gemessen. Solche Wärmemengenzähler sind gerätetechnisch aufwendig, da an jedem Heizkörper zusätzlich zu Temperaturfühlern teure Durchsatzmessgeräte angebracht werden müssen.

Aus der DE-A-2 847 217 ist ein System der eingangs genannten Art bekannt, mit dem die Wärmeenergieabgabe von Raumheizkörpern mit einfachen und billigen Temperaturfühlern und ohne Eingriff in den Heizmittelkreislauf gemessen und für den Benutzer direkt verständlich angezeigt werden kann. Diesem bekannten System liegt die Überlegung zugrunde, dass jedem Raumheizkörper eine Heizkörperkenngrösse zukommt, die auf der Grundlage der nach DIN 4704 geprüften Heizkörperleistung sowie des DIN-Blattes 7403 berechnet werden kann. Auf dieser Basis lässt sich unter Messung der mittleren Oberflächentemperatur des Heizkörpers und unter Berücksichtigung der Raumlufttemperatur die Wärmeabgabe des Raumheizkörpers erfassen.

Hiervon ausgehend liegt der Erfindung die Aufgabe zugrunde, das bekannte System zur Messung der Wärmeenergieabgabe von Raumheizungen so zu verbessern, dass die Wärmeenergieabgabe des oder der zugehörigen Heizkörper unter allen in der Praxis möglichen Bedingungen, insbesondere auch bei geringen Heizmittel-Durchsatzmengen, also starken Drosselzuständen zuverlässig und quantitativ genauer erfasst werden kann. Das System soll an beliebige Ausführungen von Raumheizkörpern und sogar Flächenheizungen mit geringem Einstellaufwand angepasst werden können und eine genaue und gerechte Heizkostenaufteilung selbst bei unterschiedlichen Raumheizkörpern oder Flächenheizungen ermöglichen. Diese Aufgabe wird durch ein System nach dem Anspruch 1 gelöst. Vorteilhafte Ausgestaltungen sind den abhängigen Ansprüchen zu entnehmen.

Theoretische Grundlage der Erfindung
Es werden folgende Grössen definiert:

$T_i$ = Raumlufttemperatur (Heizkörper-Umgebungstemperatur)

$T_V$ = Heizkörper-Vorlauftemperatur

$T_R$ = Heizkörper-Rücklauftemperatur

$\Delta T_N$ = logarithmisch gemittelte Übertemperatur aus den Prüftemperaturen

$\Delta T$ = logarithmisch gemittelte Übertemperatur

$\overline{Q}_N$ = Normwärmeleistung des Heizkörpers laut Herstellertabelle

$\overline{Q}$ = Heizkörperleistung

$Q$ = Wärmeabgabe des Heizkörpers

$t_0$ = Beginn der Messung

$t_x$ = Ende der Messung

$n$ = Heizkörperexponent laut Prüfung (Herstellertabelle)

Die Wärmeleistungsprüfung von Raumheizkörpern nach DIN 4704 erfolgt durch Messung der Vor- und Rücklauftemperaturen und des Heizmittelstroms im Raumheizkörper. Daraus ergibt sich eine Kennlinie $\overline{Q}$ über $\Delta T$, aus der sich der Heizkörperexponent $n$ errechnen lässt. Dieser Exponent $n$ ist von Heizkörpertyp zu Heizkörpertyp verschieden und liegt zwischen 1,1 und 1,5. Der jeweilige Zahlenwert von $n$ ist dem Prüfungsbericht der Heizkörperleistungsprüfung zu entnehmen.

Für die Wärmeleistung eines Raumheizkörpers gilt gemäss DIN 4703 die folgende Beziehung:

$$\overline{Q} = \overline{Q}_N\left(\frac{\Delta T}{\Delta T_N}\right)^n = \frac{\overline{Q}_N}{\Delta T_N^n}\,\Delta T^n \qquad (1)$$

Die in Gleichung (1) aus der vorausgegangenen Heizkörperprüfung bekannten Grössen wurden als Heizkörperkonstante $K$ wie folgt definiert:

$$K = \overline{Q}_N/(\Delta T_N)^n \qquad (2)$$

Die logarithmisch gemittelte Übertemperatur ist:

$$\Delta T = \frac{T_V - T_R}{\ln\left(\dfrac{T_V - T_i}{T_R - T_i}\right)} \qquad (3)$$

Die Wärmeabgabe eines Raumheizkörpers an seine Umgebung in der Zeit $t_0 - t_x$ beträgt somit:

$$Q = K \int_{t_0}^{t_x} \Delta T^n\, dt \qquad (4)$$

Die Wärmeabgabe von Flächenheizungen folgt dem zuvor für Raumheizkörper angegebenen Prinzip. Es gelten auch die vorstehend genannten Definitionen, mit der Ausnahme, dass anstelle des Begriffs «Heizkörper» jeweils der Begriff «Heizung» tritt und die Heizungskonstanten $\overline{Q}_N$ und $n$ entweder den DIN-Vorschriften für Flächenheizungen oder den vom Hersteller ermittelten Auslegedaten entnehmbar sind. Wärmeübertragungsstrecken, die durch nicht zu messende Räume führen, sind gegebenenfalls zu berücksichtigen.

Aufgrund des heute üblichen Einsatzes von thermostatischen Heizkörperventilen ist zu berücksichtigen, dass der Heizkörperexponent $n$ nicht nur vom Heizkörpertyp abhängig ist, sondern sich auch während des Betriebes in Abhängigkeit vom Heizmittelstrom bzw. dem Drosselzustand ändern kann. Dies wird bei der Erfindung berücksichtigt.

Bei der Erfindung werden die bei der Prüfung von Raumheizkörpern gemäss DIN 4704 erfassten Werte für die Normwärmeleistung $\overline{Q}_N$ des Heizkör-

pers und für den Heizkörperexponenten n auch für die Erfassung der Wärmeabgabe dieser geprüften Heizkörper im Betrieb verwendet. Diese Werte werden als Kenngrössen in die beiden vorgesehenen Eingabestufen des Systems eingegeben. Im Rechengerät, das vorzugsweise einen Mikroprozessor, z.B. den von ITT hergestellten SAA 6000 enthält, wird aus den Temperaturwerten der logarithmische Temperaturmittelwert $\Delta T$ nach Gleichung (3) gebildet, mit dem Heizungsexponenten n potenziert und über die Zeit integriert. Das Ausgangssignal des Mikroprozessors ist ein quantitatives Mass für die Wärmeabgabe der zugehörigen Raumheizung, und zwar unter Berücksichtigung des sich im Betrieb durch Thermostatventile ändernden Heizmitteldurchsatzes (Drosselzustandes).

Das Ausgangssignal kann über eine dem Mikroprozessor nachgeschaltete Anzeigevorrichtung, beispielsweise eine Digitalanzeige, in geeigneten Wärmeenergieeinheiten wie z.B. kWh, dem Benutzer direkt verständlich angezeigt werden. Die notwendigen Temperaturmessfühler sind mit vergleichsweise sehr geringem Aufwand herzustellen und anzubringen; sie können über einen Analog/Digital-Wandler an den Mikroprozessor angeschaltet werden. Sowohl der A/D-Wandler als auch der Mikroprozessor und die Digitalanzeigen können in integrierter Schaltungstechnik ausgeführt werden und sind daher ebenfalls preiswerte Bauelemente. Eine besonders einfach, empirische Korrektur zur Berücksichtigung des sich ändernden Heizmitteldurchsatzes ergibt sich nach der folgenden Beziehung:

$$\overline{Q} = \overline{Q}_N \cdot \left(\cfrac{1}{b - \cfrac{T_V - T_R}{c}}\right)^n \left(\cfrac{T_V - T_R}{\ln\cfrac{T_V - T_i}{T_R - T_i}}\right)^n = \overline{Q}_N \left(\cfrac{\Delta T}{b - \cfrac{T_V - T_R}{c}}\right)^n$$

Die in Gleichung (5) angegebenen Festwerte b und c sind im Mikroprozessor fest einprogrammiert und haben die folgenden numerischen Grössen:

b = 60 ± 2 [°K]
c = 9 ± 1.

Eine sehr genaue quantitative Messung unter Verwendung der empirischen Funktion gemäss Gleichung (5) ergab sich bei allen Drosselzuständen des Heizkörpers, also bei allen Heizmitteldurchsatzmengen mit den folgenden Festwerten:

b = 60,1
c = 9.

Fig. 1 eine schematische Darstellung eines Geräts zur Messung der Wärmeabgabe von Raumheizungen in Zuordnung zu einem Raumheizkörper;

Fig. 2 ein Blockschaltbild des in Fig. 1 gezeigten Geräts;

Fig. 3 ein Schaltbild eines Ausführungsbeispiels der Erfindung;

Fig. 4 ein Kurvendiagramm zur Veranschaulichung der Eingabe der verschiedenen Messtemperaturen über einen A/D-Wandler in einem vorgegebenen Messzeitzyklus;

Fig. 5 eine schematische Darstellung einer Einrohrheizung mit Beipass vom Vorlauf zum Rücklauf, wobei die Vor- und Rücklauf-Temperaturmessfühler an geeigneten Stellen der Heizkörperoberfläche angebracht sind;

Fig. 6 ein schematisches Systembild einer Wärmeverbrauchserfassung von Fussbodenheizungen, die von einem Heizverteiler aus mit dem Heizmittel gespeist werden, wobei jedem Raum ein Wärmeabgabemessgerät zugeordnet ist;

Fig. 7 ein schematisches Schaltbild einer Signalbewertungsanordnung, die ein beliebiges Vertauschen der Messfühler am Vorlauf und Rücklauf der Raumheizung ermöglicht; und

Fig. 8 eine schematische Darstellung einer Datenübertragungsanlage zur Übertragung der an verschiedenen Geräten gewonnenen Messwerte über ein Stromversorgungsnetz zu einem zentralen Datenerfassungsgerät.

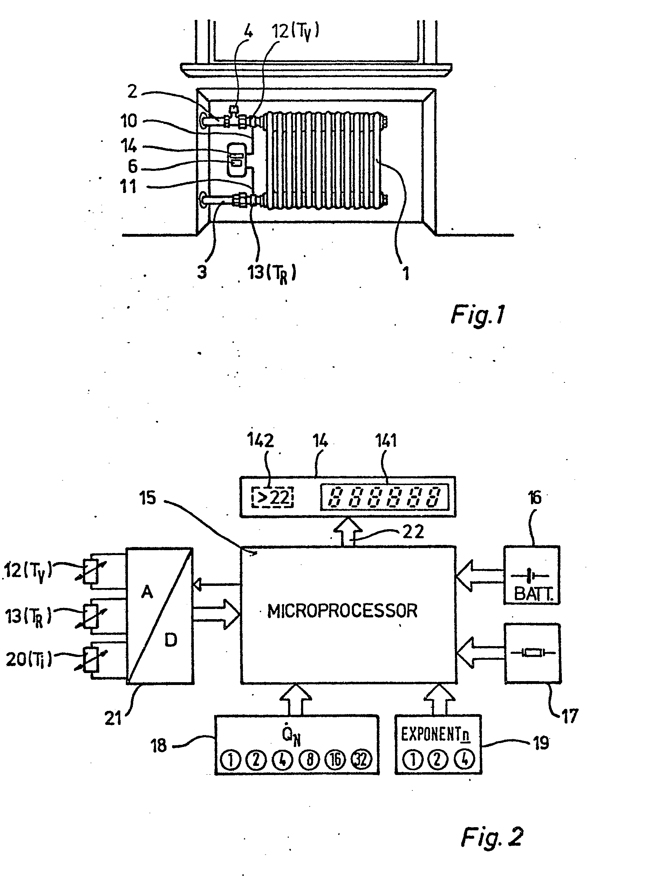

In Figur 1 ist ein Gerät zur Messung und Anzeige der Wärmeabgabe von Raumheizungen in Zuordnung zu einem Raumheizkörper 1 gezeigt. Der Raumheizkörper 1 ist über eine Vorlaufleitung 2 und eine Rücklaufleitung 3 an den Heizmittelkreislauf angeschlossen. In der Vorlaufleitung ist ein thermostatisches Heizkörperventil 4 eingebaut, durch das der Heizmittelstrom zur Einstellung einer Raumlufttemperatur gedrosselt werden kann.

Das Gerät 6, das an einer beliebigen Stelle im Raum oder auch ausserhalb des Raumes installiert werden kann, ist über Leitungen 10 und 11 mit einem die Vorlauftemperatur $T_V$ abtastenden Fühler 12 und einem die Rücklauftemperatur $T_R$ abtastenden Fühler 13 gekoppelt. Die Fühler 12 und 13 können als einfache Anlegefühler angeordnet sein und bekannte temperaturabhängige Halbleiter- oder Widerstandsbauelemente enthalten. Der die Raumluft messende Fühler ist im Gehäuse des Geräts 6 integriert. In diesem ist auch eine Digitalanzeige 24 eingebaut, die von aussen ablesbar ist und eine für den Benutzer direkt verständliche Anzeige der vom Heizkörper 1 abgegebenen Wärmeenergie vermittelt. Das Gerät 6 lässt sich in wenigen Minuten installieren und gewährleistet eine genaue Energieverbrauchserfassung ohne Eingriff in das Heizmittelsystem.

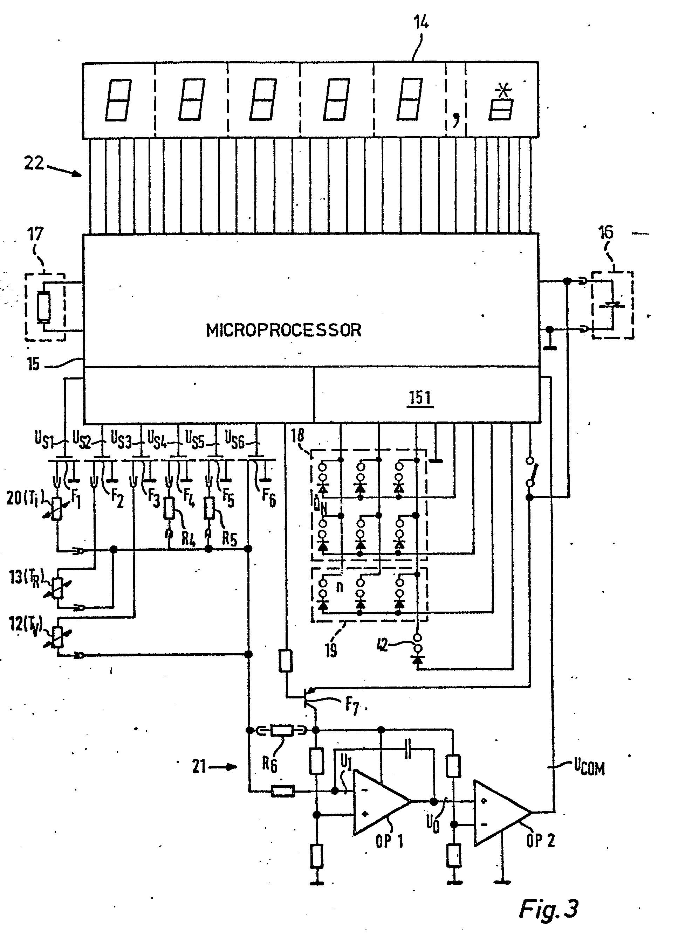

In Figur 2 ist in einem Blockschaltbild der grundsätzliche Aufbau des Systems zur Erfassung des Energieverbrauchs bzw. der Wärmeabgabe des Heizkörpers 1 dargestellt.

Herz dieses Systems bzw. des Geräts 6 ist ein Mikroprozessor 15, der von einer beispielsweise als Batterie ausgebildeten Stromversorgung 16 gespeist und von einem Taktgeber 17 getaktet wird.

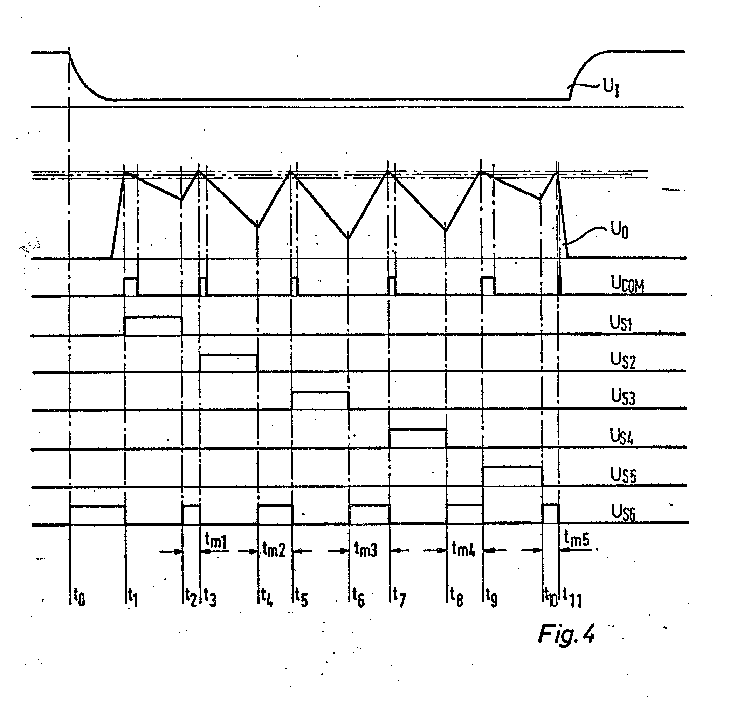

Bei der Installation des Geräts 6 wird über eine erste Eingabestufe die aus der Herstellertabelle entnommene Normwärmeleistung des Heizkörpers 1 eingegeben. Diese ist je nach Heizkörpergrösse und -typ bei dem dargestellten Ausführungsbeispiel in 64 Stufen zwischen den Mittelwerten von 300 bis 8360 (Watt) einstellbar. Eine besondere Ausführungsform der Eingabestufe 18 mit 64 Einstellmöglichkeiten wird weiter unten in Verbindung mit Figur 3 beschrieben. Über eine zweite Einstellstufe 19 wird der Heizkörperexponent n entsprechend der vorausgegangenen Heizkörperprüfung in acht Stufen zwischen 1,14 und 1,42 eingestellt.

Die Prozessvariablen, nämlich die Vorlauftemperatur $T_V$, die Rücklauftemperatur $T_R$ und die Raumlufttemperatur $T_i$, die von den Fühlern 12, 13 und 20 analog gemessen werden, werden über einen Analog/Digital-Wandler 21 in den Mikroprozessor eingegeben, so dass sie vom Mikroprozessor als temperaturproportionale digitale Grössen zwischengespeichert und verarbeitet werden können.

Der Mikroprozessor ist so programmiert, dass er die folgenden Rechenoperationen ausführt:

i:     Berechnung von $\Delta T$ aus den Prozessvariablen $T_V$, $T_R$ und $T_i$ gemäss Gleichung (3);

ii:     Entwicklung einer Korrekturgrösse als Funktion der Differenz der Vorlauf- und Rücklauftemperaturen $T_V-T_R$ zur Berücksichtigung des Drosselzustandes des Thermostatventils 4;

iii:     Berechnung von Gleichung (5) unter Verwendung der einprogrammierten Werte für b und c, der über die Eingabestufen 18 und 19 eingegebenen Heizkörperkonstanten $\overline{Q}_N$ und n sowie der Prozessvariablen $T_V$, $T_R$ und $T_i$; und

iv:     Entwicklung eines Ausgangssignals als quantitatives Mass der Wärmeenergieabgabe des Heizkörpers 1 durch Integration der Gleichung (5) über die Zeit.

Das Ausgangssignal des Mikroprozessors 15 wird über einen Sammelausgang 22 an die Anzeigeeinrichtung 14 gegeben, die die Wärmeabgabe in einem Ziffernfeld 141 anzeigt und vom Mikroprozessor bei einer besonders hohen Raumlufttemperatur $T_i \geq 22\,°C$ besonders angesteuert wird, so dass in einem zweiten Feld 142 ein Warnsignal beispielsweise in Form einer Blinkanzeige erscheint.

Die Eingabe von $\overline{Q}_N$ erfolgt bei dem beschriebenen Ausführungsbeispiel durch eine duale, dem Mikroprozessor 15 direkt verbundene Schaltung, bei der an sechs Stellen die Leitungswege einer Binärschaltung mit Hilfe von Leitgummistopfen geschlossen werden können. Die sechs Leitungswege der Binärschaltung entsprechen sechs Ziffern des Dualsystems, so dass insgesamt 64 verschiedene Einstellungen über die Binärschaltung vorgenommen werden können. Eine entsprechende Anordnung ist bei der Eingabestufe 19 zur Einstellung des Heizkörperexponenten n vorgesehen, bei der zur Einstellung von acht unterschiedlichen Werten drei Schalter selektiv mit Hilfe von Leitgummistopfen betätigt werden müssen. Die Eingabe dieser Heizkörperkonstanten muss bei der Installation erfolgen, und es muss gewährleistet sein, dass der Benutzer diese in das Messergebnis eingehende Voreinstellung nicht manipulieren kann. Die Leitgummistopfen sind daher von aussen nicht zugänglich, sondern in einem verplombten Gehäuse des Geräts 6 angeordnet.

In Figur 3 ist der Schaltungsaufbau eines Systems nach der Erfindung, insbesondere derjenige des A/D-Wandlers 21 und der Eingabestufen 18 und 19 veranschaulicht, während der Mikroprozessor als Block dargestellt ist.

Der A/D-Wandler 21 ist in Fig. 3 nur teilweise gezeigt; die dargestellten Bauelemente des A/D-Wandlers stehen zum Umsetzen der analogen Temperaturmesswerte in digitale Signale mit Komponenten des Mikroprozessors in Wechselwirkung, wobei die digitalen Messsignale in dem beschriebenen Ausführungsbeispiel im Mikroprozessor entwickelt werden.

In dem in Fig. 3 dargestellten Teil des A/D-Wandlers 21 werden die von den Messfühlern 20, 13 und 12 einlaufenden Messsignale zyklisch mit Hilfe eines Dual-Slope-Verfahrens verarbeitet.

Die als Messwiderstände ausgebildeten Temperaturfühler 20, 13 und 12 liegen ebenso wie zwei Referenzwiderstände $R_4$ und $R_5$ über je einen Feldeffekttransistor $F_1$, $F_2$, $F_3$, $F_4$, $F_5$ an dem negativen Eingang eines als Integrierstufe wirkenden ersten Operationsverstärkers OP1. Mit dem anderen Anschluss sind die Feldeffekttransistoren $F_1 \ldots F_5$ an Erde angeschaltet. Die Gates der Feldeffekttransistoren $F_1 \ldots F_5$ werden vom Mikroprozessor über getrennte Ansteuerleitungen während des Messzyklus separat angesteuert. Am Ausgang von OP1 wird ein den Ladungszustand von OP1 darstellendes Ausgangssignal $U_O$ erzeugt, das an einen Eingang eines als Komparator wirkenden Operationsverstärkers OP2 angelegt wird. Der Operationsverstärker OP2 entwickelt am Ausgang ein Impulssignal, dessen Einzelimpulse bei Erreichen eines bestimmten Schwellwerts von $U_O$ getastet und bei Unterschreiten eines anderen Schwellwerts von $U_O$ ausgeschaltet werden. Das Umladen des Integrators OP1 erfolgt mit Hilfe eines weiteren Feldeffekttransistors $F_6$, der über einen Vorwiderstand $R_6$ und einen Feldeffekttransistor $F_7$ an den positiven Anschluss der Stromversorgung bzw. Batterie 16 angeschaltet ist und vom Mikroprozessor 15 gesteuert wird. Die bei 21 in Fig. 3 dargestellten sonstigen Widerstände und Kondensatoren haben bekannte Funktionen und werden nicht näher beschrieben, um die Erfindung nicht unnötig zu belasten.

Die Funktion des A/D-Wandlers 21 wird im folgenden unter Bezugnahme auf Fig. 4 erläutert, in der eine Kurvenschar gezeigt ist, welche über einen Messzyklus $t_0 \ldots t_{11}$ den Verlauf der Signale bzw. Spannungen an verschiedenen Knotenpunkten im A/D-Wandler darstellt.

Zum Zeitpunkt $t_0$ beginnt der Messzyklus, wobei $F_7$ vom Mikroprozessor 15 angesteuert und $U_i$ am

Eingang von OP1 umgeladen wird. Gleichzeitig wird das Gate von $F_6$ ebenfalls vom Mikroprozessor angesteuert, d.h. $U_{S6}$ ist zwischen $t_0$ und $t_1$ auf einem H-Pegel. $U_O$ am Ausgang von OP1 steigt auf einen vorgegebenen Schwellenwert an, bei dem der durch OP2 gebildete Komparator schaltet und ein Ausgangssignal $U_{COM}$ auf einem H-Pegel entwickelt. Der Mikroprozessor 15 tastet den Ausgang von OP2 unter dem Zeittakt des Taktgebers 17 periodisch ab und entwickelt einen ersten Steuerimpuls $U_{S1}$ am Gate von $F_1$, sobald ($t_1$) $U_{COM}$ auf «1» geschaltet ist. Durch den Ansteuerimpuls $U_{S1}$ wird $F_1$ leitend, und der Integrator OP1 wird über den Messwiderstand 20 mit einem Strom entladen, der von dem Wert des Messwiderstandes 20, d.h. von der Raum- bzw. Umgebungstemperatur $T_i$ abhängig ist. Der Ansteuerimpuls $U_{S1}$ wird über eine konstante Zeit getastet. Bei einer Pegeländerung von $U_{S1}$ auf «0» wird OP1 durch Ansteuerung von $F_6$ mit einem Ansteuerimpuls $U_{S6}$ umgeladen, bis der obere Schwellenwert von $U_O$ erreicht ist ($t_3$). Zu diesem Zeitpunkt wird ein weiterer Impuls $U_{COM}$ am Ausgang von OP2 entwickelt und in den Mikroprozessor 15 eingegeben. Es ist zu erkennen, dass die Aufladezeit von OP1 zwischen den Zeitpunkten $t_2$ und $t_3$ proportional zum Ausmass der Entladung bei Anstehen des Steuerimpulses $U_{S1}$, d.h. proportional zur Steigung von $U_O$ im Entladeintervall $t_2-t_1$ ist. Das Aufladeintervall $t_3-t_2$ ist daher ein Mass für den Wert des Messwiderstandes 20 und bei linearem Messverhalten ein Mass für die Raumlufttemperatur $T_i$. Das Intervall $t_3-t_2$ ist daher das erste Messintervall $t_{m1}$. In der gleichen Weise werden in nachfolgenden Umladungen von OP1 unter Steuerung durch den Mikroprozessor 15 die Messwiderstände 13 ($T_R$) und 12 ($T_V$) sowie die Bezugswiderstände $R_4$ und $R_5$ abgefragt und danach die Messintervalle $t_{m2}$, $t_{m3}$, $t_{m4}$ und $t_{m5}$ bis zum Ende des Messzyklus am Zeitpunkt $t_{11}$ abgetastet. Dabei werden nacheinander die Feldeffekttransistoren $F_2$ bis $F_5$ mit konstanten Ansteuerimpulsen $U_{S2}$ bis $U_{S5}$ angesteuert. Die Messimpulse $t_{m1} \ldots t_{m5}$ sind impulsdauermodulierte Impulse, deren Impulsdauer genau proportional zu dem den Integrator OP1 entladenden Widerstand 20, 13, 12, $R_4$ bzw. $R_5$ ist. Die Widerstände $R_4$ und $R_5$ sind Referenzwiderstände, die einer vorgegebenen Referenztemperatur von beispielsweise 60° und 0 °C entsprechen. Dadurch kann sich das System selbst eichen, und es werden Messfehler aufgrund von Herstellungstoleranzen der verwendeten Bauelemente und Temperaturdriften vermieden oder zumindest weitgehend kompensiert. Die Impulsdauer $U_{S6}$ in den Messintervallen $t_{m1} \ldots t_{m5}$ wird im Mikroprozessor mit Hilfe eines geeigneten Registers zwischengespeichert und nach geeigneter Umsetzung gemäss Gleichung (5) und Integration über die Zeit als Ausgangssignal an die Leitungen 22 bzw. die Anzeigeeinrichtung 14 angelegt. Die Temperaturdifferenz $T_V-T_R$ (Messintervalle $t_{m3}-t_{m2}$) stellt auch ein verwertbares Mass für den Drosselzustand des Heizkörpers 1 bzw. für die Heizmitteldurchlassmenge dar, die in der Korrektureinrichtung 151 im Mikroprozessor 15 gemäss Gleichung (5) zur empirischen Korrektur des bei starker Drosselung sich ändernden Heizkörperexponenten n verwendet wird.

Die Eingabeeinrichtungen 18 und 19 zur Eingabe der der Herstellertabelle aufgrund der Prüfung entnommenen Heizkörperkonstanten $\overline{Q}_N$ und n sind jeweils als Diodenmatrix ausgebildet; die Leitungswege zu den einzelnen Dioden sind, wie oben gesagt, mit Hilfe jeweils eines Leitgummistopfens entsprechend einem üblichen Binärcode schliessbar. Zur Einschaltung der Blinkanzeige 142 kann auch der Leitungsweg 42 mit Hilfe eines Leitgummistopfens geschlossen werden.

Zu beachten ist, dass die beschriebene Ausbildung des A/D-Wandlers 21 und der Eingabestufen 18 und 19 nur ein Ausführungsbeispiel ist; dem Fachmann ist klar, dass andere Ausführungen von A/D-Wandlern und andere Formen der Umsetzung der analog eingehenden Prozessvariablen $T_i$, $T_R$ und $T_V$ in vom Mikroprozessor 15 verarbeitbare digitale Grössen ebenso möglich sind wie eine andere Art der Eingabe der Heizkörperkenngrössen $\overline{Q}_N$ und n, z.B. durch Kodierschalter oder Leitungsbrücken. Der Messfühler 20 zum Messen der Heizkörper-Umgebungstemperatur bzw. der Raumlufttemperatur $T_i$ sowie die Eingabemittel für die Eingabestufen 18 und 19 sollten manipulationssicher beispielsweise im Gehäuse des Geräts 6 untergebracht sein.

Die Korrektur des Werts der Wärmeleistung $\overline{Q}$ des Heizkörpers 1 und damit der Wärmeenergieabgabe Q unter Berücksichtigung des Drosselzustandes des Ventils 4 ist bei Verwendung der empirischen Beziehung gemäss Gleichung (5) im Mikroprozessor 15 besonders einfach durchführbar. Bei Verwendung der bevorzugten Werte für die Grössen b und c wird die im Mikroprozessor zu verarbeitende Gleichung (5) zur folgenden Beziehung:

$$\overline{Q} = \overline{Q}_N \cdot \frac{\Delta T}{60{,}1 - \dfrac{T_V - T_R}{9}} \tag{5a}$$

Das Abfragen der Temperaturmesswerte (Fig. 4) kann in Messzyklen erfolgen, die längere Abstände voneinander haben, da in der Praxis nicht mit raschen Temperatursprüngen bei den gemessenen Temperaturen zu rechnen ist. Daher hat das beschriebene System eine sehr geringe elektrische Leistungsaufnahme, so dass eine Batterie eine Lebensdauer von beispielsweise 2 Heizperioden (2 Jahre) hat.

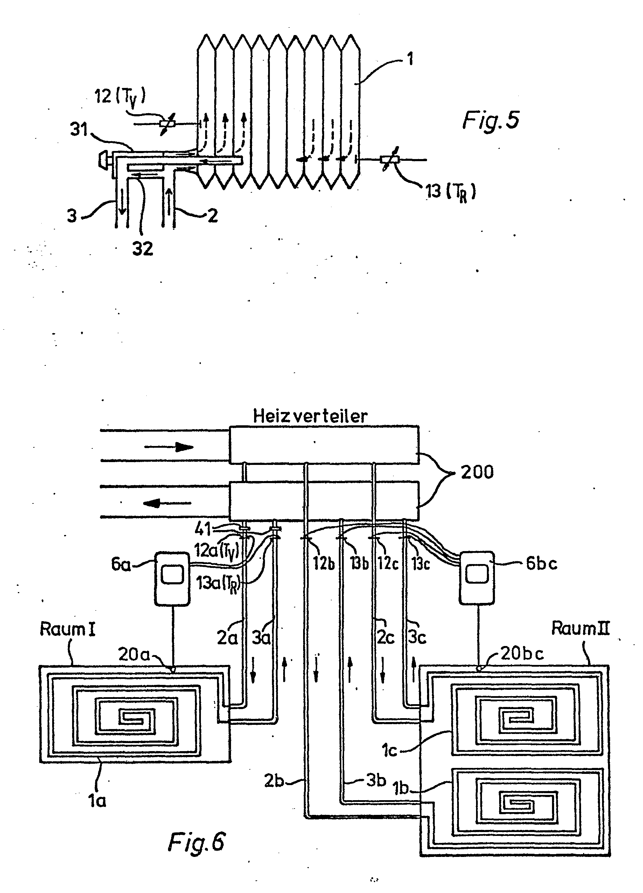

In Fig. 5 ist schematisch eine sogenannte Einrohrheizung gezeigt, bei der zur Vermeidung von Fehlmessungen die Vor- und Rücklauftemperaturfühler 12 und 13 nicht direkt an den Vor- und Rückläufen 2 und 3, sondern an für die Vor- und Rücklauftemperaturen $T_V$ und $T_R$ repräsentativen Stellen der Oberfläche des Heizkörpers 1 selbst montiert sind. Die Vor- und Rückläufe 2 und 3 münden in ein mit einem Ventil versehenen Anschlussstück 31 und werden koaxial in den Heizkörper 1 eingeführt bzw. aus diesem abgeführt.

Zwischen Vorlauf 2 und Rücklauf 3 ist ein Beipass 32 vorgesehen, über den ein Teilstrom des Vorlaufs direkt in das Rücklaufrohr 3 geleitet wird. Der Heizmittelzustrom aus dem Vorlauf 2 in den Heizkörper 1 erfolgt durch einen Ringraum, der das lanzenförmig in den Heizkörperinnenraum vorstehende Rücklaufrohr umgibt. Eine Anbringung vor allem des Rücklauftemperaturfühlers 13 am Rücklauf 3 würde den Messwert verfälschen, da der Rücklauf über den Beipass 32 mit einem direkt aus Vorlauf 2 abgezweigten Teilstrom gespeist wird. Daher sind in dem dargestellten Ausführungsbeispiel die Temperaturmessfühler 12 und 13 an denjenigen Stellen der Heizkörperoberfläche montiert, die für die Vor- und Rücklauftemperaturen ähnlich den Messungen an den Vor- und Rückläufen bei dem Ausführungsbeispiel gemäss Fig. 1 repräsentativ sind. Der hier ebenfalls als Oberflächenfühler dargestellte Vorlauftemperaturfühler 12 könnte bei dem Ausführungsbeispiel gemäss Fig. 5 auch am Vorlaufstutzen 2 angebracht werden, da die Vorlauftemperatur durch den Beipassstrom nicht beeinflusst wird.

In Fig. 6 ist ein schematisches Systembild der Erfassung des Wärmeverbrauchs bei Flächen- bzw. Fussbodenheizungen mit zwei beheizten Räumen I und II gezeigt. Bei dem dargestellten Ausführungsbeispiel werden beide Räume von einem Heizverteiler 200 mit Heizmittel versorgt. Raum I ist als kleinerer Raum in dem dargestellten Ausführungsbeispiel mit einem Heizregister bzw. -strang 1a und Raum II mit zwei Heizregistern bzw. -strängen 1b und 1c versehen. Die Vor- und Rücklauftemperaturfühler 12a, b, c und 13a, b, c sind jeweils an den Vor- und Rücklaufanschlüssen der Räume bzw. der Heizstränge angebracht. Diese Anbringung hat den Vorteil, dass auch die Wärmeübertragungsstrecken zwischen Heizverteiler 200 und den Räumen in die Messung eingehen. In alternativer Anordnung können die Vor- und Rücklauf-Temperaturfühler aber auch an den Vor- und Rückläufen 2 bzw. 3 der einzelnen Heizregister unmittelbar nach deren Raumeintritt befestigt werden.

Zur Vermeidung von Fehlmessungen durch Wärmeübertragung zwischen dem Heizverteiler 200 und den Temperaturmessfühlern 12, 13 können schlecht wärmeleitende Isolierstücke 41, die schematisch in Zuordnung zu den Vor- und Rücklaufrohren 2a und 3a dargestellt sind, in die Heizstränge eingeschaltet werden. Bei Verwendung der neuerdings üblichen Kunststoffverrohrungen, die eine schlechte Wärmeleitfähigkeit haben, wird der Einbau derartiger Thermosperren 41 in die Rohrstränge in der Regel überflüssig.

Die den beiden Wärmeabgabeerfassungsgeräten 6a und 6bc zugeordneten Raumfühler 20a und 20bc sind an einer geeigneten Stelle im zugehörigen Raum I bzw. II angeordnet. Der Raumtemperaturfühler wird zur Verhinderung unbefugter Eingriffe in einem geeigneten Gehäuse oder Mantel untergebracht und beispielsweise an einer Raumwand – gegebenenfalls in Verbindung mit einer Steckdose – befestigt.

Der Aufbau jedes Wärmeerfassungsgeräts 6a bzw. 6bc kann demjenigen des anhand der Figuren 2 und 3 beschriebenen Wärmemengenzählers 6 entsprechen. Die Heizungskonstanten $\bar{Q}_N$ und n können nach (in Vorbereitung befindlichen) DIN-Vorschriften für Fussbodenheizungen bestimmt und in den Speicher des Rechengeräts 15 eingegeben werden. Alternativ können die Werte für $\bar{Q}_N$ und n auch den vom Hersteller ermittelten Auslegedaten für Fussbodenheizungen entnommen werden (Normwärmebedarfsberechnung als Normwärmeleistung auf $m^2$ und Raumbelag bezogen, wobei die Heizmittelübertemperatur (bezogen auf Vor- und Rücklauftemperaturen) berücksichtigt wird). Die $\bar{Q}_N$ und n-Werte können aber auch über die Rohrlänge, den Rohrquerschnitt und den Rohrwärmewiderstand bzw. über das Rohrmaterial ermittelt werden, wobei die Wärmeübertragungsstrecken ausserhalb der überwachten und erfassten Räume durch geeignete Zuschläge berücksichtigt werden.

Bei der Anbringung der Fühler an unterschiedlichen Rohrmaterialien der Vor- und Rückläufe werden entsprechende C-Werte (Wärmekontaktfaktoren) in den $\bar{Q}_N$-Eingabewert als Multiplikator eingegeben. Beispielsweise ist der C-Wert für Metall 1,0 und derjenige für Kunststoff 1,1. Die Zahl der möglichen Eingabewerte für $\bar{Q}_N$ richtet sich nach der Variationsmöglichkeit der zugehörigen Eingabeeinrichtung 18 (Fig. 3). Die Eingabemöglichkeit von 128 $\bar{Q}_N$-Werten ist in der Regel ausreichend.

Der n-Wert wird bei der Fussbodenheizung in der Regel einheitlich als Festwert einprogrammiert und kann in Stufen von 0,06 zwischen den Werten 1,0 und 1,42 liegen.

Die Eingaben der $\bar{Q}_N$ und n-Werte richtet sich auch nach der verwendeten Messmethode und der Zuordnung der einzelnen Erfassungsgeräte 6a und 6bc zu den Räumen und/oder Heizsträngen. Das Gerät 6a misst den Wärmeverbrauch eines Heizregisters bzw. Heizstranges 1a. Funktion und Eingabe der Heizungskonstanten $\bar{Q}_N$ und n entsprechen dabei denjenigen bei dem anhand von Figuren 1 bis 3 beschriebenen Ausführungsbeispiel für die Wärmeabgabebestimmung von Raumheizkörpern. Das Gerät 6bc überwacht dagegen mehrere (zwei) Heizstränge 1b und 1c in einem Raum II. Sind die Werte für die Heizstränge 1b und 1c identisch, so können die $\bar{Q}_N$- und n-Werte einmalig und gemeinsam eingegeben werden. Bei unterschiedlichen Heizstrangwerten im Raum II sind dagegen die $\bar{Q}_N$- und n-Werte nacheinander über entsprechende Eingabvorrichtungen einzugeben. Grundsätzlich dasselbe gilt für den Fall, dass ein Wärmeerfassungsgerät 6 mit entsprechend vielen Messstellen einer grösseren Anzahl von Heizregistern oder sogar verschiedenen Räumen einer Wohnung zugeordnet ist. Die einem Wärmeerfassungsgerät 6 zugeordneten Vor- und Rücklauftemperaturmessfühler 12, 13 werden im Betrieb durch eine Abfragelogik nacheinander abgefragt. Die in einem Abfragezyklus für die verschiedenen Heizstränge ermittelten Wärmeverbrauchswerte können im Gerät 6 additiv kombiniert und zur Anzeige gebracht werden.

Dies erleichtert die Wärmeverbrauchserfassung für die Gesamtwohnung bzw. für einen Abnehmer.

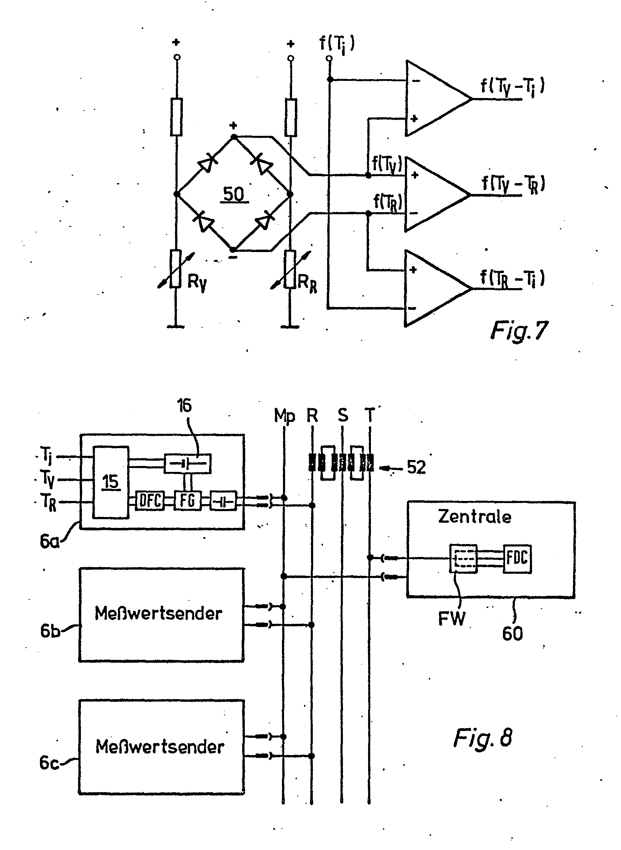

Für den praktischen Einsatz des Systems und die zuverlässige Anbringung vor allem der Vorlauf- und Rücklauf-Temperaturmessfühler ist es wichtig, dass die von den Vor- und Rückläufen abgeleiteten Temperaturmesswerte auch im Rechengerät als solche erkannt und definiert als Vorlauftemperatur bzw. Rücklauftemperatur verarbeitet werden. Es muss also vermieden werden, dass bei Vertauschen der Temperaturfühler das Messergebnis verfälscht oder beeinträchtigt wird. Eine Möglichkeit der zuverlässigen Bewertung der am Vorlauf abgegriffenen Temperatur als Vorlauftemperatur $T_V$ und der am Rücklauf abgegriffenen Temperatur als Rücklauftemperatur $T_R$ ist in Fig. 7 dargestellt. Die messwertproportionalen Signale der beiden an Vor- und Rückläufen angebrachten Temperaturmessfühler werden jeweils an einem der Wechselstromanschlüsse einer Wheatstone'schen Brücke 50 angelegt. An dem positiven «Gleichstromausgang» erscheint bei dieser Anordnung grundsätzlich das höhere, dem Vorlauftemperaturmesswert $T_V$ entsprechende Signal f ($T_V$), während an dem negativen «Gleichstromanschluss» der Brücke 50 das dem Rücklauftemperaturmesswert entsprechende Signal f ($T_R$) erscheint. Über geeignete Differenzverstärker können die bei der Wärmeenergieerfassung im Rechengerät 15 benötigten Temperaturdifferenzen zur Bestimmung der logarithmischen Übertemperatur $\Delta T$ (Gleichung 3) gewonnen werden.

Anstelle der im Ausführungsbeispiel gemäss Fig. 7 dargestellten analogen Schaltungskonfiguration zur beliebigen Vertauschbarkeit der Temperaturfühler 12 und 13 kann auch eine entsprechende digitale Logikschaltung am Eingang des Mikroprozessors 15 vorgesehen sein, oder der Mikroprozessor kann derart programmiert sein, dass der jeweils höchste Temperaturmesswert als Vorlauftemperaturmesswert bewertet wird.

Das beschriebene System liefert eine quantitative, beispielsweise digitale Verbrauchsanzeige der über die angeschlossene Heizung 1 abgegebenen Wärmemenge. Der Verbraucher hat dadurch eine unmittelbar verständliche und laufende Kontrolle seines Wärmeenergieverbrauchs. Die durch dieses System gebotene Möglichkeit der quantitativen Wärmeverbrauchserfassung ist vor allem dann wichtig, wenn viele Verbraucher, beispielsweise in Hochhäusern oder Vielparteienhäusern an eine gemeinsame Wärmequelle angeschlossen sind und eine gerechte Heizkostenverteilung vorgenommen werden muss. Das System benötigt keinen Anschluss an eine Stromquelle, sondern kann aus einem eigenen, gegebenenfalls über das Stromnetz aufladbaren Netzteil bzw. einer eigenen Batterie gespeist werden.

In vielen Fällen ist es erforderlich, die für das beschriebene Messsystem gewonnenen Messdaten zu einer Zentralen zu übertragen, an der die Messdaten zentral angezeigt und/oder aufgezeichnet werden. Diese Datenübertragung kann durch Wechselwirkung freistrahlender Sender mit einem oder mehreren Empfängern erfolgen. In

der Regel günstiger ist die Herstellung von Leitungswegen zwischen Messwertgeber und Messwertempfänger (Zentrale). Ein Ausführungsbeispiel einer Anordnung zur Übertragung der an verschiedenen Wärmeverbrauchsmessgeräten 6a, 6b und 6c gewonnenen Messwerte zu einer Zentralen ist in Fig. 8 schematisch dargestellt. Jedes Messgerät 6, dem die Prozessvariablen $T_i$, $T_V$ und $T_R$ zugeführt werden, hat einen Frequenzgenerator FG, der eine für das Gerät (6a) spezifische Trägerfrequenz erzeugt. Die von dem Prozessor 15 gemessene Wärmeenergieabgabe Q der Heizung wird in einem Wandler DFC in eine messwertproportionale Frequenz umgesetzt, mit der die Trägerfrequenz des Frequenzgenerators FG moduliert wird. Das modulierte Signal wird über einen Koppler und eine Steckdose auf das Hausstromnetz übertragen. Der Koppler trennt den FG galvanisch von der leitenden Phase des Stromnetzes. Als Betriebsstromquelle für den Sender dient die dem Prozessor 15 bzw. dem Gerät 6 zugeordnete Batterie 16.

Alle Phasenleiter R, S und T des Stromnetzes sind über die in Fig. 8 schematisch dargestellte Übertrageranordnung 52 verkoppelt, so dass die über den Phasenleiter R eingegebene modulierte Frequenz entsprechend der Darstellung in Fig. 8 empfängerseitig beispielsweise am Phasenleiter T abgegriffen werden kann.

Die über das Netz mit der Zentrale 60 gekoppelten verschiedenen Messwertsender 6a, 6b und 6c haben jeweils in unterschiedlichen Kanälen liegende Trägerfrequenzen, so dass die von verschiedenen Sendern ausgehenden Sendesignale empfängerseitig nach den unterschiedlichen Trägerfrequenzen getrennt und einzeln ausgewertet werden können. Dies geschieht in einer Frequenzweiche FW in der Zentralen 60. Der Frequenzweiche FW ist eine Wandleranordnung FDC nachgeschaltet, in der die voneinander getrennten, messwertproportionalen, frequenzmodulierten Signale in Digitalsignale (oder analoge Spannungen) umgesetzt werden. Letztere können in der Zentralen aufgezeichnet, angezeigt oder in anderer Weise weiterverarbeitet werden.

Anstelle der Datenübertragung über die Phasenleiter des Stromnetzes können auch Leitungswege in Form von direkten Ringleitungen vorgesehen werden. Ferner kann die Messwertübertragung auch über sekundäre Wellenleiter, wie Wasserrohre, Heizungsrohre oder sonstige zur Übertragung elektromagnetischer Wellen geeignete Leitungen erfolgen, die intervallweise ohne beachtliche Energieeinbussen unterbrochen sein können.

Prinzipiell kann das anhand von Fig. 8 für die Datenübertragung zwischen Messgerät 6 und Zentrale 60 beschriebene System auch zur Messwertübertragung zwischen dem Raummessfühler 20 und dem Gerät 6 vorgesehen sein; dies gilt vor allem bei Flächenheizungen, in denen Raummessfühler in der Regel von dem Gerät 6 entfernt angeordnet sind.

Die Zentralen 60 können sowohl als Wohnungszentralen als auch als Gebäudezentralen vorgesehen sein. Wenn der Zentralen 60 ebenso wie den angeschlossenen Messwertgebern 6 jeweils Sende-Empfangsgeräte zugeordnet werden, können von der Zentralen aus auch Eingabe- und Abruffunktionen erfüllt werden.

Nach Abschaltung der Heizungsanlage muss auch eine Erhöhung der Wärmeverbrauchsmessung ausgeschlossen sein. Zu diesem Zweck sind in einen dem Prozessor 15 zugeordneten Speicher bestimmte Grenzwerte der Temperaturdifferenzen $(T_V-T_i)$ und $(T_V-T_R)$ eingespeichert, mit denen die entsprechenden Temperaturmesswerte laufend verglichen werden. Unterschreiten die Istwerte der Temperaturdifferenzen $(T_V-T_i)$ und $(T_V-T_R)$ die beiden vorgegebenen Grenzwerte, so wird das die Wärmeenergieanzeige erhöhende Ausgangssignal (Leitungen 22) gesperrt. Diese «Sommerlogik» wird beispielsweise bei der folgenden Bedingung wirksam:

$$Q_{Zunahme} = 0, \text{ wenn } T_V-T_i < 5K \wedge T_V-T_R \leq 1,5K.$$

Die Ausschaltbedingung ist also nur bei gleichzeitigem Unterschreiten oder Erreichen der beiden Grenzwerte erfüllt.

**Patentansprüche**

1. System zur Bestimmung der Wärmeabgabe von Raumheizungen, die mit wenigstens einem Vorlauf (2) zur Heizmittelzufuhr und mit wenigstens einem Rücklauf (3) zur Heizmittelableitung versehen sind, mit mehreren Temperaturmessfühlern (12, 13, 20), von denen ein erster (12) die Vorlauftemperatur $T_V$, ein zweiter (13) die Rücklauftemperatur $T_R$ und ein dritter (20) die durch die Wärmeabgabe der Raumheizung (1) beeinflusste Raum- oder Umgebungstemperatur $T_i$ abtastet, mit einer Eingabeeinrichtung (18) zur selektiven Eingabe eines eine erste Heizungskonstante $\overline{Q}_N$ darstellenden Multiplikators, wobei $\overline{Q}_N$ die Normwärmeleistung eines Heizkörpers nach DIN 4704 oder die Wärmeleistung laut Herstellerangabe ist und mit einem Rechengerät (15), das mit den Temperaturmessfühlern (12, 13, 20) und der Eingabeeinrichtung (18) gekoppelt ist und die abgetasteten Temperaturmesswerte $T_V$, $T_R$, $T_i$, die erste Heizungskonstante $\overline{Q}_N$ und einen eine zweite Heizungskonstante n darstellenden Exponenten derart kombiniert und über die Zeit integriert, dass der Ausgang des Rechengeräts ein quantitatives Mass für die Wärmeabgabe einer Heizung (1) darstellt, wobei n der Heizkörperexponent ist, dadurch gekennzeichnet, dass eine zweite Eingabeeinrichtung (19) zur selektiven Eingabe von n vorgesehen ist und dass das Rechengerät (15) eine Korrektureinrichtung (151) enthält, die ein von der Differenz der Vorlauf- und Rücklauftemperaturen $T_V-T_R$ abhängiges Korrektursignal $\Delta T_K$ entwickelt, mit dem das die Wärmeabgabe der Raumheizung darstellende Signal zur Berücksichtigung des Heizmitteldrosselzustandes mit zunehmender Differenz $T_V-T_R$ erhöht wird.

2. System nach Anspruch 1, dadurch gekennzeichnet, dass der Korrektureinrichtung (151) zwei Festwerte $b = 60 \pm 2$ °K und $c = 9 \pm 1$ eingegeben sind und die Korrektureinrichtung (151) so ausgebildet ist, dass sie das Korrektursignal $\Delta T_K$ in Abhängigkeit von der Differenz $T_V-T_R$ sowie den beiden Festwerten b, c nach der Beziehung

$$\Delta T_K = \frac{1}{b - \dfrac{T_V-T_R}{c}}$$

bildet, und dass das Rechengerät (15) in Zuordnung zu der Korrektureinrichtung (151) einen programmierbaren Prozessor aufweist, der so programmiert ist, dass er die Temperaturmesswerte $T_V$, $T_R$, $T_i$ zu einer logarithmisch gemittelten Übertemperatur $\Delta T$ nach der Beziehung

$$\Delta T = \frac{T_V-T_R}{\ln \dfrac{T_V-T_i}{T_R-T_i}}$$

verarbeitet, $\Delta T$ und $\Delta T_K$ mit der selektiv eingegebenen zweiten Heizungskonstanten n potenziert, mit der selektiv eingegebenen ersten Heizungskonstanten $\overline{Q}_N$ multipliziert und über die Zeit integriert, so dass der Ausgang des Prozessors die folgende Bedingung erfüllt:

$$Q = \overline{Q}_N \int_{t_0}^{t_x} (\Delta T_K)^n \cdot (\Delta T)^n dt,$$

wobei Q proportional zu der von der Raumheizung (1) an die Umgebung abgegebenen Wärmeenergie ist.

3. System nach Anspruch 2, dadurch gekennzeichnet, dass der Prozessor einen Speicher enthält, in den als Festwerte $b = 60,1$ °K und $c = 9$ einprogrammiert sind.

4. System nach einem der Ansprüche 1 bis 3, dadurch gekennzeichnet, dass eine Anzeigeeinrichtung (14) an den Ausgang (22) des Rechengeräts (15) angeschaltet ist und die Anzeigeeinrichtung (14) einen numerischen Wert Q proportional zu der von der Raumheizung (1) abgegebenen Wärmeenergie anzeigt.

5. System nach einem der Ansprüche 1 bis 4, dadurch gekennzeichnet, dass das Rechengerät (15) die Temperaturmesswerte $T_V$, $T_R$, $T_i$ nach einem von einem Zeittaktgeber (17) abgeleiteten Zeittakt zyklisch abfragt und in geeigneten Registern zwischenspeichert.

6. System nach einem der Ansprüche 1 bis 5, dadurch gekennzeichnet, dass die Eingabeeinrichtungen (18, 19) als Schalter-Dioden-Matrix ausgebildet sind, wobei jeder Schalter in jeder Eingabeeinrichtung einer Binärziffer einer Binärzahl entspricht und durch Betätigung einer oder mehrerer Schalter der Matrix eine bestimmte Binärzahl entsprechend dem Wert der der Heizung zugeordneten Heizungskonstanten $\overline{Q}_N$ bzw. n voreinstellbar ist.

7. System nach einem der Ansprüche 2 bis 6, dadurch gekennzeichnet, dass die Temperaturfühler temperaturabhängige Widerstände (12, 13, 20) sind und parallel zueinander mit der analogen Eingangseinheit eines Analog/Digital-Wandlers (21) gekoppelt sind, ferner eine vom Prozessor (15) gesteuerte Abfrageschaltung ($U_{S1}$ ... $U_{S6}$) mit der Eingangseinheit des Analog/Digital-Wandlers gekoppelt ist und in einem Messzyklus die Temperaturmesswerte der temperaturabhängigen Widerstände (12, 13, 20) nacheinander abfragt und dass die zyklisch abgetasteten Temperaturmesswerte vor der Verarbeitung zum Messsignal Q in Registern des Prozessors zwischengespeichert werden.

8. System nach Anspruch 7, dadurch gekennzeichnet, dass der Analog/Digital-Wandler (21) eine Reihenschaltung aus einer Integrierstufe (OP1) und einer Komparatorstufe (OP2) aufweist, wobei durch Umladen der Integrierstufe eine zur Grösse des Messwiderstandes proportionales Signal ($U_O$) mit sägezahnförmigem Verlauf entwickelt wird, das in der Komparatorstufe (OP2) in eine impulsabstandsmodulierte Impulsfolge ($U_{COM}$) umgesetzt wird und dass der Prozessor (15) das Ausgangssignal der Komparatorstufe in eine Folge von binären Messimpulsen umsetzt, deren Länge jeweils proportional zur gemessenen Temperatur ist.

9. System nach einem der Ansprüche 1 bis 8, dadurch gekennzeichnet, dass ein geräteeigenes Netzteil (16) mit wenigstens einer Batterie zur Stromversorgung des Rechengeräts (15) und der an dieses angeschalteten Komponenten (14, 17, 21) vorgesehen ist.

10. System nach einem der Ansprüche 1 bis 9, dadurch gekennzeichnet, dass als Temperaturmessfühler (12, 13) zur Messung der Vor- und Rücklauftemperaturen $T_V$ und $T_R$ Anlegefühler verwendet werden, die an der Aussenseite der zugehörigen Vor- und Rücklaufleitungen (2, 3) in Kontakt gehalten sind.

11. System nach einem der Ansprüche 1 bis 10, gekennzeichnet durch eine Signalbewertungsanordnung (50), die von zwei Temperaturmesssignalen das der höheren Temperatur entsprechende Signal als Vorlauftemperaturmesswert $T_V$ und das andere als Rücklauftemperaturmesswert $T_R$ bewertet und zur Weiterverarbeitung überträgt, so dass die Temperaturmessfühler (12, 13) an den Heizungsvor- und -rückläufen (2, 3) beliebig austauschbar sind.

12. System nach einem der Ansprüche 1 bis 11, dadurch gekennzeichnet, dass das Rechengerät (15) einen Speicher, in welchem vorgegebene Grenzwerte der Temperaturdifferenzen $T_V$–$T_i$ und $T_V$–$T_R$ gespeichert sind, und eine Logikschaltung enthält, welche die gemessenen Istwerte der Temperaturdifferenzen $T_V$–$T_i$ und $T_V$–$T_R$ mit den beiden vorgegebenen Grenzwerten vergleicht und ein eine Erhöhung der Wärmeverbrauchsanzeige verhinderndes Haltesignal erzeugt, wenn die Istwerte der Temperaturdifferenzen deren voreingestellten Werte unterschreiten.

13. System nach einem der Ansprüche 1 bis 12 zur Bestimmung der Wärmeabgabe eines Einrohr-Raumheizkörpers mit Beipassventil, dadurch gekennzeichnet, dass die Vor- und Rücklauftemperaturfühler (12, 13) als Anlegefühler an solchen Stellen der Oberfläche des Heizkörpers (1) montiert sind, die für die Vor- und Rücklauftemperaturen $T_V$ und $T_R$ repräsentativ sind.

14. System nach einem der Ansprüche 1 bis 13 zur Bestimmung der Wärmeabgabe von Flächenheizungen, deren Heizstränge von einem Heizverteiler mit Heizmittel gespeist sind, dadurch gekennzeichnet, dass jedem vom Heizverteiler (200) abgehenden Heizstrang (1a, 1b, 1c) ein Vor- und Rücklauf-Temperaturmessfühler (12a, b, c und 13a, b, c) zugeordnet ist und dass der Raumtemperaturfühler (20) in dem vom zugehörigen Heizstrang beheizten Wohnraum angeordnet ist.

15. System nach Anspruch 14, dadurch gekennzeichnet, dass die Vor- und Rücklauf-Temperaturmessfühler (12a, 13a) im Anschlussbereich der Heizstränge (1a) am Heizverteiler (200) angebracht sind und dass zur Vermeidung einer Fehlmessung durch direkte Wärmeübertragung zwischen Heizverteiler (200) und Messfühler (13a) jeweils ein thermisches Isolierstück (41) in den Heizstrang zum Heizverteiler eingeschaltet ist.

16. System nach einem der Ansprüche 1 bis 15, dadurch gekennzeichnet, dass die mehreren Heizkörpern (1) oder Heizsträngen (1b, 1c) bzw. Räumen zugeordneten Temperaturmessfühler (12, 13; 12b, 13b; 12c, 13c, 20) mit einem Rechengerät (15) gekoppelt sind und dass dem Rechengerät eine Abfrageeinrichtung zur sequentiellen zyklischen Abfrage der jedem Heizkörper oder Heizstrang zugeordneten Fühlergruppen (12, 13, 20) zugeordnet ist, wobei die durch sequentielle Abfragung gewonnenen Wärmeabgabewerte durch Addition zu einem Messsignal Q kombiniert werden.

17. System nach einem der Ansprüche 1 bis 16, dadurch gekennzeichnet, dass zur Übertragung der Messwerte $T_i$, Q von einem Messfühler (z.B. 20) zu einem entfernt gelegenen Wärmeerfassungsgerät und/oder von letzterem zu einer entfernt gelegenen Zentralen (60) eine Datenübertragungsanlage mit wenigstens einem eine Wandleranordnung (DFC) zur Erzeugung eines messwertproportionalen Sendesignals enthaltendem Sender und wenigstens einem den Messwert wiedergewinnenden Empfänger vorgesehen ist und dass die Sender (6) und die Empfänger (60) über elektromagnetische oder elektrische Leitungswege miteinander gekoppelt sind.

18. System nach Anspruch 17, dadurch gekennzeichnet, dass jeder Sender (6a, 6b, 6c) einen eine senderspezifische Trägerfrequenz erzeugenden Frequenzgenerator (FG) aufweist, dass die Trägerfrequenz mit einer von der Wandleranordnung (DFC) erzeugten messwertproportionalen Modulationsfrequenz modulierbar ist und dass empfängerseitig eine Demodulatoranordnung (FDC) zum Umsetzen des frequenzmodulierten Signals in ein messwertproportionales Analog- oder Digitalsignal vorgesehen ist.

19. System nach Anspruch 18, dadurch gekennzeichnet, dass die Sender (6a, 6b, 6c) mit den Empfängern (60) koppelnden Leitungswege sekundäre Wellenleiter wie Wasser- oder Heizungsrohre sind und dass in der Signaleingangsstufe des Empfängers (60) eine Frequenzweiche (FW) zur Trennung der unterschiedlichen Sendern (6a, 6b, 6c) zugeordneten Trägerfrequenzen angeordnet ist.

20. System nach Anspruch 18, dadurch gekennzeichnet, dass die Sender (6a, 6b, 6c) mit den Empfängern (60) koppelnden Leitungswege der Phasenleiter (R, S, T) des Stromversorgungsnetzes sind und dass in der Signaleingangsstufe des Empfängers (60) eine Frequenzweiche (FW) zur Trenung der unterschiedlichen Sendern (6a, 6b, 6c) zugeordneten Trägerfrequenzen angeordnet ist.

## Claims

1. A system for determining the heat emission of room heating elements, which are provided with at least one supply (2) for supplying the heating medium and with at least one return (3) for returning said heating medium, comprising a plurality of temperature measuring sensors (12, 13, 20) of which a first one (12) measures the supply temperature $T_V$, a second one (13) measures the return temperatures $T_R$ and a third one (20) senses the room or ambient temperature $T_i$ influenced by the heat emission of the room heating element (1), said system comprising an input means (18) for selectively inputing a multiplicator representing a first heating element constant $\overline{Q}_N$, $\overline{Q}_N$ being the standard heat power of a heating element in accordance with DIN 4704 (German Industry Standard 4704) or the heating power according to the manufacturer indication, and further comprising a computer (15) which is coupled with the temperature measuring sensors (12, 13, 20) and with the input device (18) and which combines the sensed temperature measuring values $T_V$, $T_R$, $T_i$, the first heating element constant $\overline{Q}_N$ and an exponent representing a second heating element constant n and integrates said values and constants over the time in such a manner that the output of the computer represents a quantitative measure for the heat emission of a heating element (1), n being the heating element exponent, characterized in that a second input device (19) for the selective input of n is provided and in that said computer (15) comprises a correction device (151), which develops a correction signal $\Delta T_K$ dependent on the difference of the supply and return temperatures $T_V$–$T_R$, with which correction signal the signal representing the heat emission of the room heating element is increased with increasing difference $T_V$–$T_R$, in order to consider the heating medium throttle condition.

2. A system according to claim 1 characterized in that the correction device (151) is provided with two fixed values b = 60 ± 2°K and c = 9 ± 1 and in that the correction device (151) is constructed so as to form the correction signal $\Delta T_K$ in response

to the difference $T_V$–$T_R$ as well as both fixed values b, c in accordance with the equation

$$\Delta T_K = \frac{1}{b - \dfrac{T_V - T_R}{c}}$$

and in that the computer (15) comprises in association with the correction device (151) a programmable processor, which is programmed so that it processes the temperature measuring values $T_V$, $T_R$, $T_i$ into a logarithmically averaged excess temperature $\Delta T$ according to the equation

$$\Delta T = \frac{T_V - T_R}{\ln \dfrac{T_V - T_i}{T_R - T_i}}$$

so that said processor potentiates $\Delta T$ and $\Delta T_K$ with the selectively fed second heating element constant n, so that it multiplies said powers with the selectively fed first heating element constant $\overline{Q}_N$ and so that it integrates over the time said powers so that the output of the processor the following condition,

$$Q = \overline{Q}_N \int_{t_o}^{t_x} (\Delta T_K)^n \cdot (\Delta T)^n dt,$$

Q being proportional to the heat energy emitted from the room heating element (1) to the environment.

3. A system according to claim 2 characterized in that the processor contains a memory in which b = 60,1°K and c = 9 are programmed as fixed values.

4. A system according to anyone of claims 1 to 3 characterized in that an indicating device (14) is coupled to the output (22) of the computer (15) and in that said indicating device (14) indicates a numerical value Q proportional to the heat energy emitted from the room heating element (1).

5. A system according to anyone of claims 1 to 4 characterized in that the computer (15) is cyclically polling the temperature measuring values $T_V$, $T_R$, $T_i$ based on a polling cycle derived from a clock means (17) and temporarily stores these values in suitable registers.

6. A system according to anyone of claims 1 to 5 characterized in that the input devices (18, 19) are each formed as a switch-diode-matrix, each switch in each input device corresponding to a binary digit of a binary number and a defined binary number being preadjustable by actuating one or more switches of the matrix corresponding to the value of the heating element constants $\overline{Q}_N$ respectively n allocated to the heating element.

7. A system according to anyone of claims 2 to 6 characterized in that the temperature sensors are temperature-responsive resistors (12, 13, 20) and are coupled, parallel to each other, with the analogous input unit of an analog/digital-converter (21), further in that a polling circuit ($U_{S1}$ ... $U_{S6}$) controlled by the processor (15) is coupled with the input unit of the analog/digital-converter and is sequentially polling temperature measuring values of the temperatur-responsive resistors in a measuring cycle, and in that the polled temperature measuring values are stored temporarily in registers of the processor before being processed into the measuring signal Q.

8. A system according to claim 7 characterized in that the analog/digital-converter (21) comprises a series circuit consisting of an integrating stage (OP1) and a comparator stage (OP2), a signal ($U_O$) proportional to the dimension of the measuring resistor and with saw tooth shape being developed by reloading the integrating stage, which signal is converted into a pulse spacing modulated pulse sequence ($U_{COM}$) in the comparator stage (OP2), and in that the processor (15) converts the output signal of the comparator stage into a sequence of binary measuring pulses, the length of which is proportional to the measured temperature.

9. A system according to anyone of claims 1 to 8 characterized in that a built-in power unit (16) is provided with at least one battery for supplying current to the computer (15) and the components (14, 17, 21) coupled thereto.

10. A system according to anyone of claims 1 to 9 characterized in that feed contact sensors are used as temperature measuring sensors (12, 13) to measure the supply and return temperatures $T_V$ and $T_R$ which contact sensors are held in contact on the outside of the associated supply and return lines (2, 3).

11. A system according to anyone of claims 1 to 10 characterized by a signal evaluation arrangement (50), which evaluates from two temperature measure signals the signal corresponding to the higher temperature as the supply temperature measuring value $T_V$ and the other as the return temperature measuring value $T_R$ and transmits said signals for their further processing so that the temperature measure sensors (12, 13) at the supply and the return of the heating element (2, 3) can be exchanged in any way.

12. A system according to anyone of claims 1 to 11 characterized in that the computer (15) comprises a memory, in which predetermined limits of the temperature differences $T_V-T_i$ and $T_V-T_R$ are stored, and a logic circuit, which compares the measured actual value of the temperature difference $T_V-T_i$ and $T_V-T_R$ with both predetermined limits and which produces a stop signal preventing an increase of the heat consumption indicator, when the actual values of the temperature differences are lower than their predetermined values.

13. A system according to anyone of claims 1 to 12 for determining the heat emission of a one-pipe room heating element with a by-pass valve, characterized in that the supply and return temperature sensors (12, 13) are fixed as contact sensors to such parts of the surface of the heating element (1), which are representative of the supply and return temperatures $T_V$ and $T_R$.

14. A system according to anyone of claims 1 to 13 for determining the heat emission of surface heating elements, the heating branches of which are supplied with heating medium through a heat distributor, characterized in that one supply and return temperature measuring sensor (12a, b, c and 13a, b, c) is associated with each heating branch (1a, 1b, 1c) branching off the heat distributor (200) and in that the room temperature sensor (20) is arranged in the room heated by the corresponding heating branch.

15. A system according to claim 14 characterized in that the supply and return temperature measuring sensors (12a, 13a) are attached in the region, where the heating branches (1a) are connected to the heat distributor (200) and in that a thermal insulating piece (41) is inserted in the heating branch toward the heat distributor to avoid a false measurement due to direct heat transfer between the heat distributor (200) and the measuring sensor (13a).

16. A system according to anyone of claims 1 to 15 characterized in that the temperature measuring sensors (12, 13, 12b, 13b, 12c, 13c, 20) associated with several heating elements (1) or heating branches (1b, 1c) respectively rooms are coupled with the computer (15) and in that a sensing device for the sequential polling of sensor groups (12, 13, 20) associated with each heating element or heating branch is associated with the computer, heat emission values gained through sequential polling being combined to a measuring signal Q by addition.

17. A system according to anyone of claims 1 to 16 characterized in that a data transmission system having at least one transmitter comprising a converter arrangement (DFC) for producing a measuring value-proportional transmission signal and at least one receiver for regaining said measuring value is provided for the transmission of the measuring values $T_i$, Q from a measuring sensor (for example 20) to a remote heat recording device and/or from said heat recording device to a remote central station (60) and in that the transmitters (6) and the receivers (60) are coupled with each other over electromagnetic or electric conductor paths.

18. A system according to claim 17 characterized in that each transmitter (6a, 6b, 6c) comprises a frequency generator (FG) producing a transmitter-specific carrier frequency, in that said carrier frequency can be modulated with a measuring value-proportional modulation frequency produced by the converter arrangement (DFC) and in that at the side of the receiver a demodulator arrangement (FDC) is provided to convert the frequency-modulated signal into a measuring value-proportional analog or digital signal.

19. A system according to claim 18 characterized in that the conductor paths coupling the transmitters (6a, 6b, 6c) with the receivers (60) are secondary wave conductors like water or heater pipes and in that in the signal input stage of the receiver (60) a frequency isolating filter (FW) is arranged for isolating the carrier frequencies associated with the different transmitters (6a, 6b, 6c).

20. A system according to claim 18 characterized in that the conductor paths coupling the transmitters (6a, 6b, 6c) with the receivers (60) are the phase conductors (R, S, T) of the electric power system an in that in the signal input stage of the receiver (60) a frequency isolating filter (FW) is arranged to isolate the carrier frequencies associated with the different transmitters (6a, 6b, 6c).

## Revendications

1. Système de détermination de la chaleur fournie par des systèmes de chauffage de volumes, qui sont pourvus d'au moins une arrivée (2) pour introduire un agent de chauffage et d'au moins un retour (3) pour évacuer l'agent de chauffage, comportant plusieurs sondes de mesure de température (12, 13, 20) dont une première (12) mesure la température d'entrée $T_V$, une seconde (13) la température de retour $T_R$ et une troisième (20) la température de volume ou d'environnement $T_i$ influencée par la chaleur fournie par le système de chauffage de volume (1), un dispositif d'entrée (18) pour introduire sélectivement un multiplicateur représentant une première constante de chauffage $\overline{Q}_N$, $\overline{Q}_N$ désignant la puissance normale de chauffe d'un appareil de chauffage conformément à DIN 4704 ou bien la puissance calorifique définie par le fabricant, ainsi qu'un calculateur (15), qui est relié aux sondes de mesure de température (12, 13, 20) et au dispositif d'entrée (18) et qui combine et intègre dans le temps les valeurs de mesures de température $T_V$, $T_R$, $T_i$ qui ont été captées, la première constante de chauffage $\overline{Q}_N$ et un exposant représentant une seconde constante de chauffage n de telle sorte que la sortie du calculateur représente une mesure quantitative de la chaleur fournie par un système de chauffage (1), n désignant l'exposant de l'appareil de chauffage, caractérisé en ce qu'il est prévu un second dispositif d'entrée (19) servant à introduire sélectivement n et en ce que le calculateur (15) contient un dispositif de correction (151), qui produit un signal de correction $\Delta T_K$ fonction de la différence entre les températures d'entrée et de sortie $T_V$–$T_R$ et au moyen duquel le signal représentant la chaleur fournie par le système de chauffage de volume est augmenté, pour tenir compte du degré d'étranglement d'agent de chauffage, lors de l'augmentation de la différence $T_V$–$T_R$.

2. Système selon la revendication 1, caractérisé en ce que deux valeurs fixes b = 60 ± 2°K et c = 9 ± 1 sont introduites dans le dispositif de correction (151) et le dispositif de correction (151) est agencé de telle sorte qu'il détermine le signal de correction $\Delta T_K$ en fonction de la différence $T_V$–$T_R$ et des deux valeurs fixes b, c conformément à la relation:

$$\Delta T_K = \frac{1}{b- \dfrac{T_V-T_R}{c}}$$

et en ce que le calculateur (15) comporte, en association avec le dispositif de correction (151), un processeur programmable qui est programmé de telle sorte qu'il transforme les valeurs de mesure de températures $T_V$, $T_R$, $T_i$ en un écart de température $\Delta T$ déterminé logarithmiquement conformément à la relation:

$$\Delta T = \frac{T_V-T_R}{\ln \dfrac{T_V-T_i}{T_R-T_i}}$$

$\Delta T$ et $\Delta T_K$ étant augmentés à la puissance n, correspondant à la seconde constante de chauffage introduite sélectivement, étant multipliés par la première constante de chauffage $\overline{Q}_N$ introduite sélectivement et étant intégrés dans le temps, de telle sorte que le signal de sortie du processeur satisfasse à la relation suivante:

$$Q = \overline{Q}_N \int_{t_o}^{t_x} (\Delta T_K)^n \cdot (\Delta T)^n dt,$$

où Q est proportionnelle à l'énergie thermique cédée par le système de chauffage de volume (1) à l'environnement.

3. Système selon la revendication 2, caractérisé en ce que le processeur contient une mémoire dans laquelle sont introduites en programme, comme valeurs fixes, b = 60,1°K et c = 9.

4. Système selon une des revendications 1 à 3, caractérisé en ce qu'un dispositif indicateur (14) est relié à la sortie (22) du calculateur (15) et le dispositif indicateur (14) indique une valeur numérique Q proportionnelle à l'énergie thermique cédée par le système de chauffage de volume (1).

5. Système selon une des revendications 1 à 4, caractérisé en ce que le calculateur (15) extrait cycliquement les valeurs de mesure de températures $T_V$, $T_R$, $T_i$ conformément à un processus de temporisation établi par une horloge (17) et soumet lesdites valeurs à une mémorisation intermédiaire dans des registres appropriés.

6. Système selon une des revendications 1 à 5, caractérisé en ce que les dispositifs d'entrée (18, 19) sont agencés sous la forme d'une matrice à diodes et commutateurs, auquel cas chaque commutateur de chaque dispositif d'entrée correspond à un chiffre binaire d'un nombre binaire et, par actionnement d'un ou plusieurs commutateurs de la matrice, un nombre binaire déterminé, correspondant à la valeur des constantes de chauffage $\overline{Q}_N$ ou n associées au système de chauffage, est réglable au préalable.

7. Système selon une des revendications 2 à 6, caractérisé en ce que les sondes de mesure de températures sont des résistances sensibles à la température (12, 13, 20) et sont branchées mutuellement en parallèle avec l'unité analogique d'entrée d'un convertisseur analogique/numérique (21), en outre un circuit d'interrogation ($U_{S1}$ ... $U_{S6}$) commandé par le processeur (15) est relié à l'unité d'entrée du convertisseur analogique/numérique et extrait successivement, dans un cycle de mesure, les valeurs de mesure de température des résistances sensibles à la température (12, 13, 20), et en ce que les valeurs de mesure de température extraites cycliquement sont soumises à une mémorisation intermédiaire dans des registres du processeur avant le traitement sous forme du signal de mesure Q.

8. Système selon la revendication 7, caractérisé en ce que le convertisseur analogique/numérique (21) comporte un circuit-série se composant d'un étage d'intégration (OP1) et d'un étage de comparaison (OP2), en ce que, par chargement de l'étage intégrateur, un signal ($U_O$) proportionnel à la grandeur de la résistance de mesure, et produit avec un profil en forme de dents de scie est converti dans l'étage de comparaison (OP2) en une séquence d'impulsions ($U_{COM}$) modulées en espacement d'impulsions, et en ce que le processeur (15) convertit le signal de sortie de l'étage de comparaison en une séquence d'impulsions binaires de mesure dont la longueur est respectivement proportionnelle à la température mesurée.

9. Système selon une des revendications 1 à 8, caractérisé en ce qu'une source de courant (16) appropriée pour l'appareil et comportant au moins une batterie est prévue pour l'alimentation en courant du calculateur (15) et des composants (14, 17, 21) reliés à celui-ci.

10. Système selon une des revendications 1 à 9, caractérisé en ce qu'il est prévu, comme sondes de mesure de températures (12, 13) servant à mesurer les températures d'entrée et de sortie $T_V$ et $T_R$, des sondes d'application qui sont maintenues en contact avec le côté extérieur des conduits correspondants d'entrée et de sortie (2, 3).

11. Système selon une des revendications 1 à 10, caractérisé par un dispositif de traitement de signaux (50), qui traite, parmi deux signaux de mesure de température, le signal correspondant à la température la plus élevée comme une valeur de mesure de température d'entrée $T_V$, et l'autre signal comme une valeur de mesure de température de sortie $T_R$ et qui transmet lesdites valeurs en vue d'un traitement ultérieur de telle sorte que les sondes de mesure de températures (12, 13) soient permutables à volonté sur les conduits d'entrée et de sortie d'appareil de chauffage (2, 3).

12. Système selon une des revendications 1 à 11, caractérisé en ce que le calculateur (15) comporte une mémoire dans laquelle sont mémorisées des valeurs limites prédéterminées des différences de températures $T_V$–$T_i$ et $T_V$–$T_R$ et qui contient un circuit logique qui compare les valeurs réelles mesurées des différences de températures $T_V$–$T_i$ et $T_V$–$T_R$ avec les deux valeurs limites prédéterminées et qui produit un signal de maintien empêchant une prolongation de l'indication de consommation de chaleur quand les valeurs réelles des différences de températures deviennent inférieures aux valeurs limites préréglées.

13. Système selon une des revendications 1 à 12 pour la détermination de la chaleur fournie par un appareil de chauffage de volume à un seul tube comportant une valve à bypass, caractérisé en ce que les sondes de températures d'entrée et de sortie (12, 13) sont montées comme des sondes d'application en des endroits de la surface de l'appareil de chauffage (1) qui sont représentatifs des températures d'entrée et de sortie $T_V$ et $T_R$.

14. Système selon une des revendications 1 à 13 pour la détermination de la chaleur fournie par des systèmes de chauffage de surfaces, dont les conduits de chauffage sont alimentés en agent de chauffage par un répartiteur de chauffage, caractérisé en ce qu'à chaque conduit de chauffage (1a, 1b, 1c) partant du répartiteur de chauffage (200) est associée une sonde de mesure de température d'entrée et de sortie (12a, b, c et 13a, b, c) et en ce que la sonde de mesure de température de volume (20) est disposée dans le volume chauffé par le conduit de chauffage associé.

15. Système selon la revendication 14, caractérisé en ce que les sondes de mesure de températures d'entrée et de sortie (12a, 13a) sont disposées dans la zone de jonction des conduits de chauffage (1a) avec le répartiteur de chauffage (200) et en ce que, pour éviter une erreur de mesure par transmission directe de chaleur entre le répartiteur de chaleur (200) et la sonde de mesure (13a), il est prévu respectivement un élément d'isolation thermique (41) dans le conduit de chauffage aboutissant au répartiteur de chauffage.

16. Système selon une des revendications 1 à 15, caractérisé en ce que les différents appareils de chauffage (1) ou conduits de chauffage (1b, 1c) ou sondes de mesure de températures associées aux volumes (12, 13; 12b, 13b; 12c, 13c, 20) sont reliés à un calculateur (15) et en ce que le calculateur est associé à un dispositif d'interrogation servant à interroger cycliquement et séquentiellement les groupes de sondes (12, 13, 20) associés à chaque appareil de chauffage ou à chaque conduit de chauffage, auquel cas les valeurs de fourniture de chaleur sont obtenues par interrogation séquentielle sont combinées par addition sous la forme d'un signal de mesure Q.

17. Système selon une des revendications 1 à 16, caractérisé en ce que, pour une transmission des valeurs de mesure $T_i$, Q depuis une sonde de mesure (par exemple 20) jusqu'à un appareil de détermination de chaleur placé dans une position éloignée et/ou de ce dernier jusqu'à une centrale (60) placée en un endroit éloigné, il est prévu une installation de transmission de données comportant au moins un émetteur contenant un dispositif convertisseur (DFC) servant à produire un signal d'émission proportionnel à une valeur de mesure et au moins un récepteur récupérant la valeur de mesure et en ce que l'émetteur (6) et le récepteur (60) sont reliés entre eux par l'intermédiaire de voies conductrices électromagnétiques ou électriques.

18. Système selon la revendication 17, caractérisé en ce que chaque émetteur (6a, 6b, 6c) comporte un générateur de fréquence (FG) produisant une fréquence porteuse spécifique de l'émetteur, en ce que la fréquence porteuse est modulable avec une fréquence de modulation proportionnelle à une valeur de mesure produite par le convertisseur de fréquence (DFC) et en ce que, du côté-récepteur, il est prévu un dispositif démodulateur (FDC) pour convertir le signal modulé en fréquence en un signal analogique ou numérique proportionnel à la valeur de mesure.

19. Système selon la revendication 18, caractérisé en ce que les voies conductrices reliant les émetteurs (6a, 6b, 6c) aux récepteurs (60) sont des guides d'ondes secondaires comme des tubes d'eau ou des tubes de chauffage et en ce qu'il est prévu dans l'étage d'entrée de signal du récepteur (60) un séparateur de fréquence (FW) servant à la séparation des fréquences porteuses associées aux différents émetteurs (6a, 6b, 6c).

20. Système selon la revendication 18, caractérisé en ce que les voies conductrices reliant les émetteurs (6a, 6b, 6c) avec les récepteurs (60) sont les conducteurs de phases (R, S, T) du réseau d'alimentation en courant et en ce qu'il est prévu dans l'étage d'entrée de signal du récepteur (60) un séparateur de fréquence (FW) pour séparer les fréquences porteuses associées aux différents émetteurs (6a, 6b, 6c).

Fig.1

Fig. 2

Fig.3

Fig. 4

Fig. 5

Fig. 6

Fig. 7

Fig. 8